# EUROPEAN PATENT SPECIFICATION

(11) **EP 2 938 803 B1**
(45) Date of publication and mention of the grant of the patent: **14.02.2018**
(21) Application number: 13811358.4
(22) Date of filing: 17.12.2013
(51) Int. Cl.: E06C 1/52, F03D 1/06, B29C 70/30

(54) **METHOD FOR PRODUCING A WIND TURBINE BLADE**
METHODE ZUR HERSTELLUNG EINER WINDTURBINENSCHAUFEL
PROCÉDÉ DE PRODUCTION D'UNE LAME DE TURBINE ÉOLIENNE

(30) Priority: 31.12.2012 DK 201270837
(43) Date of publication of application: 04.11.2015
(73) Proprietor: Vestas Wind Systems A/S, 8200 Aarhus N (DK)
(72) Inventor: ROBINSON, Samuel, Newport PO30 5JX (GB)
(74) Representative: Vestas Patents Department
(86) International application number: PCT/DK2013/050435
(87) International publication number: WO 2014/101918

(56) References cited:
- EP-A- 1 310 351
- WO-A-2009/139619
- FR-A1- 2 388 124
- US-A- 2 708 543
- US-A1- 2002 046 543
- US-A1- 2012 080 271
- US-B1- 6 983 823

## Description

### BACKGROUND OF THE INVENTION

### 1. FIELD OF THE INVENTION

The present invention relates to the field of manufacturing of blades for large wind turbines, in particular to a method for producing a wind turbine blade including accessing the inclined curved slopes of a manufacturing mould.

### 2. STATE OF THE ART

Due to the remarkable dimensions of wind turbine blades, in modern installations being up to 80 m in length and having diameters of 5m and more at the root side, the moulds used in blade production must also have dimensions which are adequate for a blade to be formed therein. During the blade production process, the moulds are usually placed on the ground. Since the vertical dimensions of these moulds often exceed several metres, it is particularly hard for an operator to access all areas of the mould. DK200400032 discloses a gantry, movable in a longitudinal direction of a wind turbine blade mould, and being configured for laying up fibre glass mats from a spool into a mould. WO2009/139619 discloses a known method of manufacturing a wind turbine blade half including providing fibre mats in a mould for a blade and subsequently introducing a curable resin into the fibre mats under reduced pressure prior to curing the resin to form a shell. An object of the present invention is to provide a convenient method and device for allowing an operator to access all areas of a wind turbine blade mould in the process of manufacturing a blade for a wind turbine.

### BRIEF DESCRIPTION OF THE INVENTION

The invention proposes a method for producing a wind turbine blade as defined in appended claim 1. Optionally, by repositioning a climbing device during the blade manufacturing process along the length of the blade forming mould, the user can access all locations of the inner walls of a wind turbine blade mould during the production of the blade. The device is particularly well suited for that purpose in that it can adapt to all curvatures and shapes of the inner walls of the mould due to its flexibility. Furthermore, the device is designed in such a way that an operator is prevented from accidentally damaging the underlying mould surface, i.e. a portion of the inner wall of the mould, or the material layers previously deposited onto the mould surface.

Advantageous embodiments of the method are described below and are defined in the dependent claims 2-15.

A device used for climbing up an inclined surface comprises a flexible support comprising a back face and a front face. The back face of the support is adapted to abut on the surface during operation of the device. The flexible support is adapted to conform to the curved profile of the surface to be climbed and is suitably extended so as to distribute across the surface the weight of an operator climbing up the surface during operation of the device. The device further comprises fastening means for fastening the device so that the position of the device is fixed with respect to the surface during operation of the device. The fastening means are connected to the support. The device further comprises climbing elements firmly fixed to the upper face of the flexible support. The climbing means are adapted to allow a user to climb up or take a position at a predetermined area of portion of the surface.

According to the present invention, the climbing elements comprise a plurality of steps, each step of the plurality of steps protruding outwards from the front face of the support. Thus, a user can take a position or climb up an inclined surface by using the steps as support. The steps are preferably formed so that the operator can comfortably stand when the support is placed at some point on the surface supported by the steps. Furthermore, the steps are formed so as to distribute the weight of the operator across an extended area of the underlying support.

According to a further embodiment of the present invention, the climbing elements may comprise a plurality of handles adapted to be held by a user when climbing up the inclined surface. Thus, a user can climb up or take position at a certain height of an inclined surface without falling down, by holding on one of the handles.

According to yet another preferred embodiment of the present invention, the support comprises a continuous flexible mat.

### BRIEF DESCRIPTION OF THE FIGURES

In the following, the present invention will be illustrated by means of the embodiments shown in the attached figures. In the figures, similar, corresponding or equal parts are identified by the same reference numerals. In particular:
Fig. 1 shows a perspective view of a preferred embodiment of the device used in the method according to the present invention;
Fig. 2 shows a cross-section of a preferred embodiment of the device used in the method according to the present invention;
Fig. 3 shows an application of a preferred embodiment of the device used in the method according to the present invention;
Fig. 4 shows a cross section of a wind turbine blade mould during a stage of blade production.

### DETAILED DESCRIPTION

In the following, the present invention will be clarified and explained by means of a detailed description of the embodiments of the present invention shown in the attached figures. However, it should be appreciated that the present invention is not limited to the embodiments shown in the attached drawings and described in the following. Rather, the scope of the present invention includes all equivalent embodiments and is thus defined by the claims.

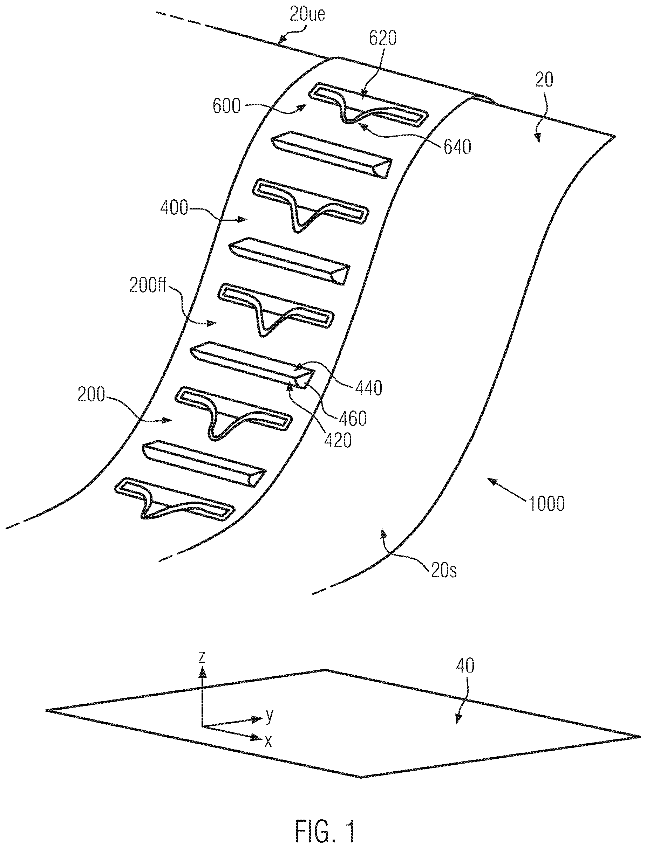

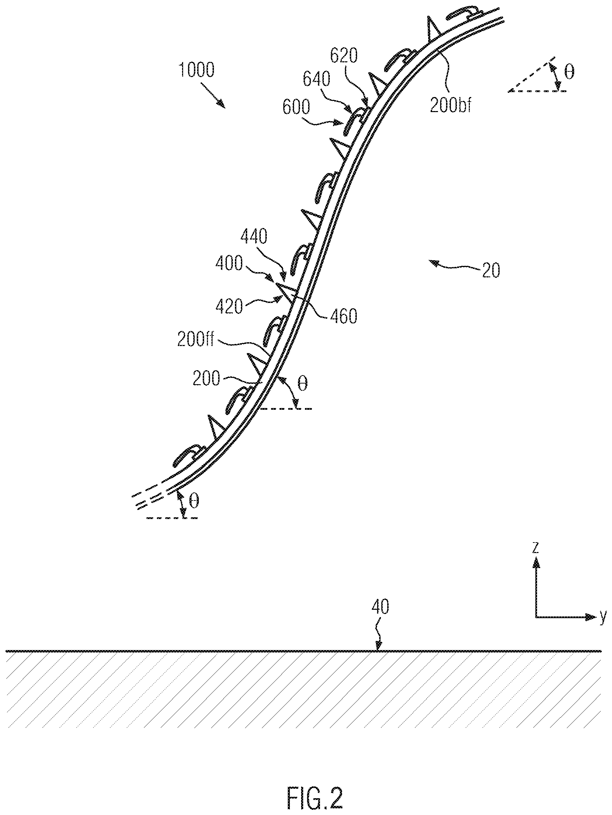

In the following, local expressions such as "above" or "below" will always be referred to a reference plane used as the ground level or ground plane. This reference plane is preferably horizontal. For example, in Figures 1 and 2, reference plane is indicated by the reference numeral 40 and is parallel to horizontal plane xy defined by the system of Cartesian axes shown the figures. Thus, when stating that a point A is above (below) a point B, it will be understood that the distance of point A from the reference plane is greater (less) than the distance of point B from the reference plane.

The present invention provides a method using a device for climbing up a surface of a mould, or of a wall thereof.

Embodiments of the device used in the method of the present invention are shown in Figures 1 and 2, in which the surface to be climbed is indicated by the reference numeral 20s. Surface 20s is shown as belonging to a structure 20. Surface 20s is inclined so that, given a point on surface 20s, an angle θ of inclination with respect to the reference plane 40 is defined. More specifically, inclination angle θ at one point of surface 20s is defined as the angle formed by the tangent plane to surface 20s at that point with reference plane 40. Inclination angle θ of surface 20s with respect to the reference plane 40 is greater than zero and can assume any value less than or equal to 90°.

Surface 20s is generally not flat. Thus, given a curve lying on surface 20s, this curve may be undulate with a complicated curvature. For example, some portions of a generic curve on surface 20s may have positive curvature, other portions negative curvature and yet other portions null curvature. Due to the curvature of surface 20s, inclination angle θ assumes generally different values at different points lying on surface 20s, as schematically shown for example in Fig. 2.

Surface 20s may comprise an upper edge 20ue, i.e. a terminating portion lying above and furthest from reference plane 40. Each point of upper edge 20ue can have any positive, negative or null curvature. The minimum distance between the upper edge 20ue of surface 20s and reference plane 40 can be any distance up to several tens of metres. For example, the distance between upper edge 20ue of surface 20s and reference plane 40 can be in the range of 5 to 10 m.

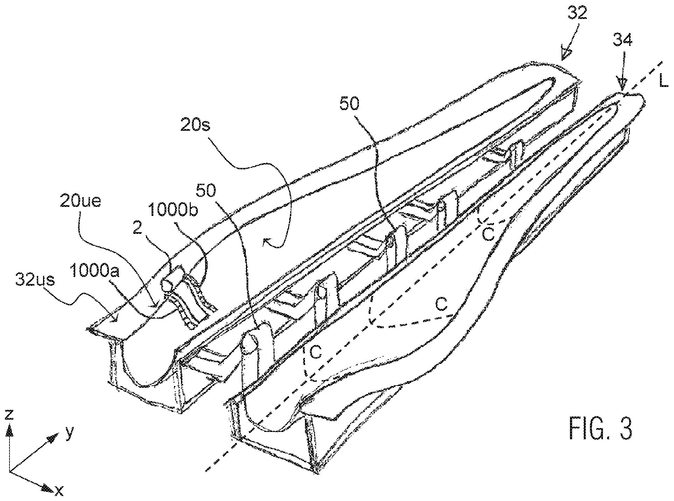

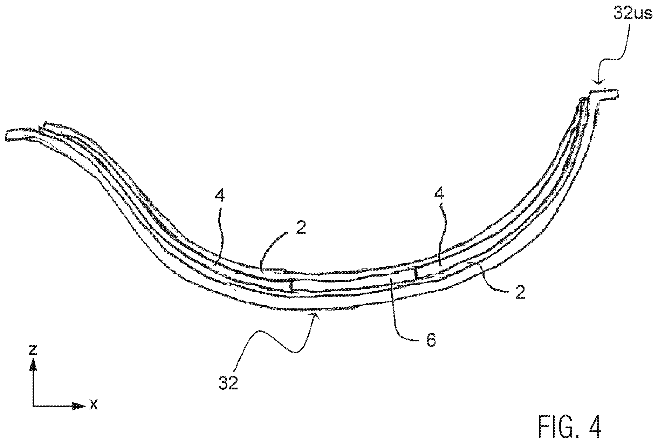

Supporting structure 20 can be any body extended in space having surface 20s as one of its terminating surfaces. For example, structure 20 may comprise a wall or a side of a mould. In the following, with reference to figures 3 and 4, an example will be given of a structure 20 comprising a wind turbine blade mould. It should be however clarified that structure 20 is substantially rigid, so that the position of surface 20s is constant in time. Furthermore, structure 20 is formed in such a way that surface 20s is able to support the average weight of a human operator without substantially deforming, bending or macroscopically changing its original position.

The device 1000 shown in Figures 1 and 2 comprises a flexible support 200, positioned on inclined surface 20s. Support 200 can be made from any flexible material.

In the preferred embodiment of the present invention shown in Figures 1 and 2, support 200 comprises a flexible mat, i.e. a flat piece of a flexible material having a substantially rectangular shape. For example, mat 200 may comprise a polymer material such as an elastomer or a rubber. Mat 200 may also comprise PVC. The PVC may then comprise suitable additives to make it simultaneously robust and flexible.

Preferably, support 200 is formed as a flexible slab. In other words, support 200 has a thickness which is much less than its two lateral dimensions, i.e. length and width. Thus, support 200 comprises a front face 200ff and a back face 200bf with a much greater area than the remaining side faces connecting the front face 200ff to the back face 200bf. Front face 200ff and back face 200bf have a substantially rectangular shape, so that two main directions mutually orthogonal can be identified on both front face 200ff and back face 200bf. More specifically, the longitudinal direction of front face 200ff or back face 200bf will be identified as a direction substantially parallel to the length of front face 200ff or back face 200bf. On the other hand, the transverse direction of front face 200ff or back face 200bf will be identified as a direction substantially normal to the longitudinal direction and, thus, parallel to the width of front face 200ff or back face 200bf.

According to an embodiment of the present invention, support 200 is formed so as to be continuous and not to have any cut-out portions inside. In particular, both front surface 200ff and back surface 200bf of support 200 are substantially continuous and do not have holes or cut-out portions. Thus, support 200 is formed as a continuous, full slab not having any through holes inside it. In particular, support 200 is so formed as to not contain any through holes extending across its thickness, i.e. through holes between front face 200ff and back face 200bf.

Back face 200bf of support 200 is adapted to contact the surface 20s to be climbed. The width of support 200, i.e. the width of front face 200ff and of back face 200bf of support 200, is greater than about 20 cm. The width of support 200 can be as large 1.5 m and, preferably, from 50 cm 70 cm. Even more preferably, support 200 is 60 cm wide. The height of support 200, i.e. the length of front face 200ff and of back face 200bf, may be adjusted depending on the extension of the surface 20s to be climbed. Thus, the height of support 200 can be of about 5 metres or greater, in particular in a range of 4 m to 6 m.

The front face 200ff of support 200, i.e. the face opposite back face 200bf abutting onto surface 20s of supporting structure 20, comprises a plurality of climbing elements adapted to allow a user to climb up the surface onto which support 200 is suspended or secured.

According to the method of the present invention, the climbing elements comprise a plurality of steps 400, protruding from front face 200ff of support 200. Steps 400 may also comprise a polymeric material. For example, steps 400 may comprise an elastomer or a rubber. Steps 400 may also comprise PVC, of the same composition as used for support 200 according to a particular embodiment of the invention.

Steps 400 are attached to front face 200ff of support 200. For example, steps 400 may be fixed by means of an adhesive to front face 200ff of support 200. Alternatively, if both front face 200ff of support 200 and steps 400 comprise a polymer, steps 400 may be firmly fixed to support 200 by means of plastic welding. Furthermore, according to an embodiment of the invention, some or all of steps 400 may be formed integrally with support 200.

Some or all of steps 400 are formed so as to be overall rigid when device 1000 is in operation. In this manner, steps 400 cannot substantially be displaced from their original position by the weight of a user standing on or climbing up steps 400. For example, some steps 400 may be formed as a rigid body. Alternatively, as described in the following, at least one step 400 may be formed so as to form a flexible pocket attached to front face 200ff of support 200. When device 1000 is in operation, the pocket can be filled with a rigid support body so as to make step 400 rigid.

Steps 400 may be of any shape allowing an operator to step up support 200, when this is hung or fixed to surface 20s. Preferably, a step 400 comprises a top portion 440, a bottom portion 420, a side portion 460 and an abutting portion 480.

Top portion 440 is preferably shaped as a portion of a flat surface. According to the embodiment of the present invention shown in Fig. 1, top portion 440 is obtained as a rectangular portion of a flat surface. However, top portion 440 does not have to be necessarily rectangular and can have, for example, triangular, rhombic, trapezoidal, parallelogram-like shape or other shapes known to the skilled person and suitable to the specific field of application of device 1000. Top portion 440 comprises and end sub-portion abutting onto front face 200ff of support 200. This abutting end sub-portion of top portion 440 can be attached to front face 200ff of support 200.

Top portion 440 is adapted to be stepped on by the user during operation of device 1000. Thus, in order to climb up surface 20os, the user steps onto steps 400 by sequentially resting his feet onto top portion 440 of each step.

The length of top portion 440 of steps 400, i.e. its dimension along the transversal direction of support 200, is smaller or nearly equal to the width of support 200. In particular, the length of top portion 440 of steps 400 can be in the range of 10 cm to about 80 cm. The width of top portion 440, i.e. the dimension of the protruding part of steps 400, can be in the range of 10 cm to 50 cm. In particular, the width of top portion 440 of steps 400 is chosen so that steps 400 protrude from support 200 to a sufficient extent for a user to comfortably stand upon each of them while climbing up surface 20s or while operating at a certain height of surface 20s.

The flat surface including top portion 440 forms with front face 200ff of support 200 an angle, which is here considered to be oriented in the direction going from front face 200ff to top portion 440 of step 400. The angle between front face 200ff and top portion 440 of steps 400 can be included in the range of 45° to 135°. Preferably, the surface from which top portion 440 is cut out forms an angle close to 90° with the front face 200ff of support 200.

The angle between top portion 440 and front face 200ff of support 200 may not be the same for all steps 400. In particular, the width of the angle between top portion 440 and front face 200ff may depend on the curvature of the portion of surface 20s onto which device 1000 is suspended. For example, steps 400 with top portions 440 forming a larger (smaller) angle with front face 200ff can be implemented in portions of the surface with lower (higher) slope.

A protection layer can optionally be applied to the surface of top portion 440 adapted to be stepped upon by the user.

Bottom portion 420 of step 400 is arranged below and is contiguous to top portion 440. Bottom portion 420 may confer stability to step 400 and strengthen adhesion of step 400 to front face 200ff of support 200. The profile of the cross-section of bottom portion 420 can be either straight or curved. Bottom portion 420 extends along the transverse direction of support 200 by a length which is preferably equal to the length of top portion 440.

Bottom portion 420 comprises and end sub-portion abutting onto front face 200ff of support 200. The abutting end sub-portion of bottom portion 420 can be attached to front face 200ff of support 200. An end sub-portion of bottom portion 420 opposite the end sub-portion abutting onto support 200 is then contiguous and attached to an end sub-portion of top portion 440.

Step 400 further comprises an abutting portion 480 having a surface abutting onto front face 200ff of support 200. Abutting portion 480 is contiguous to both top portion 440 and bottom portion 420. The weight of a user standing on step 400 is transferred to support 200 mainly through abutting portion 480. The abutting surface of abutting portion 480 extends along the transverse direction of support 200 by a predetermined length and along the longitudinal direction of support 200 by a predetermined width. The surface of abutting portion 480 abutting onto front face 200ff of support 200 has a length which is generally equal to the length of step 400. By length of step 400, it is here indicated the dimension of step 400 along the transversal direction of support 200, i.e. along a direction normal to the longitudinal direction of support 200. The width of the abutting surface of abutting portion 480 is then chosen so that the weight of a user is suitably distributed across front face 200ff of support 200 in as homogeneous as possible a manner. In particular, the width of the surface of abutting portion 480 abutting onto front face 200ff of support 200 may be in the range of 5 to 50 cm and, preferably, 15 to 30 cm.

Side portion 460 delimits step 400 in the transversal direction of support 200, i.e. in the direction orthogonal to the longitudinal direction of support 200. More specifically, side portion 460 comprises a left-hand sub-portion and a right-hand sub-portion delimiting step 400 on the left-hand side and right-hand side, respectively. Thus, the length of step 400 is defined as the distance between the left-hand sub-portion and the right-hand sub-portion of side portion 460. Both left-hand sub-portion and right-hand sub-portion of side portion 460 comprise a portion of a surface which is preferentially flat and are contiguous to top portion 440, bottom portion 420 and abutting portion 480. Thus, the perimeter of both left-hand and right-hand sub-portions of side portion 460 is defined by the cross sections of top portion 440, bottom portion 420 and abutting portion 480, respectively.

Some or all of steps 400 may be formed as a single block and attached to front face 200ff of support 200. Steps 400 may be fully filled with material or may be hollow inside.

Alternatively or additionally, some or all of steps 400 may be formed as a pocket attached to front face 200ff of support 200 and adapted to be filled with a rigid support element or bar. More in detail, at least one step 400 may be formed in the manner described below. Top portion 440, bottom portion 420 and abutting portion 480 are formed as foils, with a thickness much less than their lateral dimensions. In particular, top portion 440 and bottom portion 420 could be formed by the same foil. Moreover, abutting portion could also be formed of the same foil forming top portion 440 and bottom portion 420. Top portion 440 and bottom portion 420 are so designed that a cavity or a pocket is defined by top portion 440, bottom portion 420 and abutting portion 480.

The cavity or pocket thus formed may be attached to the front face 200ff of support 200 by means of an end sub-portion of the top portion 440 and/or an end sub-portion of the bottom portion 420. Furthermore, the pocket may be attached to front face 200ff also by means of abutting portion 480.

The pocket may be filled with a support element, preferably rigid. The support element comprises a rigid bar having a predetermined cross-section. The support element may have a length which is equal or slightly less than the length of step 400. Alternatively, the support element may also have a length greater than the length of step 400. If rigid element extends by a length greater than step 400, then the side portion 460 of step 400 comprises the left-hand end portion and the right-hand end portion of the rigid element, respectively.

The support element may comprise, for example, wood, polystyrene foams or any other material which is rigid and easy to process and to shape into bars with a predetermined cross-section. The support element is then inserted into the pocket defined by top portion 440 and bottom portion 420. After the rigid element has been inserted into the pocket, step 400 is made hard enough for supporting the weight of an operator standing on it.

The shape of the cross-section of the rigid support element determines the shape of the cross-section of step 400 into which the support element is inserted. The support element can then be formed so that its cross-section substantially corresponds in shape to side portion 460. In this manner, when inserted into the pocket, the support element abuts onto the inner surface of top portion 440, the inner surface of bottom portion 420 and the inner surface of abutting portion 480 of step 400. Thus, the support element generally comprises a substantially flat surface adapted to abut onto and to support top portion 440 of step 400 after the support element has been introduced into the pocket of step 400. The support element also comprises a surface abutting onto bottom portion 420 of step 400 and with a corresponding shape. Finally, the support element has a surface, preferentially flat, facing or being substantially coincident with abutting portion 480 of step 400. The weight of a user standing on step 400 is transferred onto support 200 mainly through this flat surface of the support element. In particular, the surface of the support element in the vicinity of abutting portion 480 may directly abut onto front face 200ff of support 200. In this case, abutting portion 480 of step 400 substantially coincides with the flat surface of the support element abutting onto front face 200ff of support 200.

According to an embodiment of the present invention, the rigid support element can alternatively be inserted into and removed from step 400. For example, the pocket may be in communication with the outside by means of an opening or a cut formed in top portion 440, bottom portion 440, or side portion 460 of step 400. According to an embodiment of the present invention, the rigid support element can be inserted into and removed from the pocket in step 400 through an aperture in the left-hand portion or right-hand portion of side portion 460. In particular, the aperture can be as large as the whole left-hand or right-hand sub-portions of side portion 460. In this case, the pocket inside step 400 is into communication with the outside through the entire area of left-hand sub-portion or the entire area of right-hand sub-portion of side portion 460. An embodiment is also possible wherein the pocket inside step 400 is in communication with the outside through the entire area of both left-hand sub-portion and right-hand sub-portion of side portion 460.

If the pocket is in communication with the outside as described above, each rigid support element can be inserted into the corresponding step 400 when device 1000 is being used and can be extracted from the corresponding step 400 after operation of device 1000.

According to an embodiment of the present invention, the foils or the single foil forming top portion 440, bottom portion 420 and, if present, abutting portion 480 are flexible. Furthermore, according to a particular embodiment of the present invention, side portion 460 is flexible.

Thus, if top portion 440, bottom portion 420, abutting portion 480 and side portion 460 are flexible and if the rigid support element is extractable, it can be extracted from the corresponding step 400 after use of device 1000. After extracting the rigid element, device 1000 only comprises flexible elements, since both support 200 and steps 400 are flexible. Thus, device 1000 can be conveniently rolled after use, thus being easily carried into a storage area and stored therein until the subsequent use.

According to an embodiment of the present invention, the climbing elements comprise one or, preferentially, a plurality of handles 600 attached to front face 200ff of flexible support 200. One or more of handles 600 may comprise a fixing element 620 and a gripping element 640.

Fixing element 620 is preferentially shaped as a thin parallelepiped, with one of its wide faces attached to front face 200ff of support 200. Gripping element 640 is then attached to the face of fixing element 620 opposite the face attached to front face 200ff of support 200. Alternatively, gripping element 640 could be directly attached to front face 200ff of support 200, without the presence of fixing element 620. Fixing element 620 of handle 600 may comprise a polymeric material. More specifically, fixing element 620 may comprise a rubber or an elastomer. For example, fixing element 620 may comprise PVC. Fixing element 620 may be integrally formed with support 200.

Gripping element 640 is conveniently formed from a fibrous material. For example, gripping element 640 may comprise a strip of nylon webbing of suitable width and length. Side portions of gripping element 640 are fixed to corresponding portions of either fixing element 620 or front face 200ff of support 200. For example, end portions of gripping element 640 may be stitched onto fixing element 620 or front face 200ff of support 200. If gripping element 640 comprises a fibrous material, its end portions may be fixed so that gripping element remains loose when not being grabbed by a user, as shown for example in Fig. 1. Alternatively, one or more gripping elements 640 may comprise a rigid material such as a rigid polymer or a metal and be formed with a curved profile, so that, when the one or more gripping elements 640 are fixed onto support 200, each of them forms a corresponding handle that a user can hold.

According to one embodiment of the present invention, at least one handle 600 is formed integrally with support 200. Thus, according to one embodiment of the present invention at least one climbing element is formed integrally with support 200.

Preferably, handles 600 are arranged at a position along the longitudinal direction of support 200 between two consecutive steps 400. Thus, when climbing a particularly steep inclined surface 20s by using device 1000, the operator can use his hands to hold gripping element 640 of handles 600, so as not to fall down during climbing up surface 20s.

According to an embodiment of the present invention, the width of support 200 is greater than or equal to the length of each climbing element. The length of a climbing element is here indicated as its dimension along the transverse direction of support 200. In particular, both steps 400 and handles 600 extend along the transverse direction of support 200 by a length which is entirely included within the width of front face 200ff of support 200. In this manner, when a user operates on surface 20s by stepping onto device 1000, the user is prevented from accidentally hitting and damaging lower-lying surface 20s. Indeed, support 200, particularly when comprising a continuous mat, acts as a protection between the user and the surface 20s, preventing the user from unintentionally hitting surface 20s while standing on one or more steps 400 of device 1000 suspended onto surface 20s.

The device 1000 according to the present invention further comprises fastening means, adapted to secure, hang or suspend device 1000 onto inclined surface 20s to be climbed. Fastening means are adapted to maintain the position of device 1000 substantially fixed with respect to surface 20s. Although local elastic deformations of device 1000 are possible during device operation, it is to be understood that fastening means allow the time-averaged position of a point of device 1000 with respect to surface 20s to be substantially constant, when device 1000 is suspended or secured onto surface 20s.

Fastening means are preferably attached to support 200. Fastening means may secure or suspend support 200 onto upper edge 20ue of inclined surface 20s.

Fastening means may for example comprise one or more strings or ropes. One end of the strings or ropes could be fixed to an area of support 200 near one short edge of back face 200ff. The strings or ropes can then be tied to corresponding studs adapted to exert a reaction to the force exerted by device 1000, in particular when being operated. The studs onto which the fastening means of device 1000 are tied have a constant position with respect to surface 20s to be accessed.

Alternatively or additionally, fastening means may comprise one or more suction pads adapted to be attached to surface 20s or to structure 20 supporting surface 20s. Suction pads can be fixed to some predetermined areas of back face 200bf of support 200.

In a further embodiment, fastening means comprise a plurality of rings attached to one of the short edges of support 200. The rings are adapted to be constrained to slide along a pole whose position is held constant with respect to surface 20s and supporting structure 20. The pole may be maintained fixed with respect to structure 20 at a position near to upper edge 20ue of surface 20s. In this manner, device 1000 can be suspended on surface 20s by means of the rings constrained along the pole, in a similar manner as a curtain is hung on its rod by means of a set of rings attached to an edge of the curtain. Furthermore, the position of device 1000 can be easily shifted along a predetermined direction of surface 20s by simply pushing device 1000 along the direction of the axis of the pole.

The device 1000 according to the present invention provides a particularly convenient climbing tool for accessing steep surfaces such as slopes or sides of a wall having an inclination with a reference, typically horizontal, plane. During operation, device 1000 is suspended onto the surface to be climbed and fixed onto it by means of the fixing means. A user can then climb up the surface by stepping up steps 400 from the reference plane level. If required, the user can hold handles 600 while climbing up, so as not to fall due to the inclination of the surface.

Since support 200 supporting steps 400 and handles 600 is extremely flexible, device 1000 can perfectly adapt to all sorts of curvature profiles of the surface to be climbed, even if the curvature of the surface is particularly complicated.

Device 1000 allows a user to climb up a steep slope without damaging the surface onto which the device leans, particularly if support 200 comprises a flexible mat or a continuous slab. Indeed, the device as such may not damage the surface, since it is preferably formed from a polymeric material. Furthermore, the support 200 prevents a user stepping up steps 400 from unintentionally damaging or scratching the surface underneath, for example by accidentally hitting the surface with his feet. This is possible due to support 200 which may extend without holes or cut-outs across the whole width of steps 400, thus forming a continuous damage-protection layer between the operator and the surface.

Device 1000 is such that, besides climbing up, a user may also comfortably stand on one step 400 or on two consecutive steps 400 while being in equilibrium at a desired position on the surface supported by device 1000. In particular, the length and the width of steps 400 can be adjusted at will. Thus, top portion 440 of steps 400 offers the user's feet a flat platform, which is wide enough for the user to firmly and comfortably stand upon. The user may then carry out the desired operations on the surface while taking position at a predetermined point across the surface thanks to the support provided by device 1000.

Furthermore, the steps 400 and the support 200 may be designed so that the weight of a user standing on or climbing up device 1000 is not concentrated in a point or along a line but is distributed in as homogeneous as possible a way across an extended area. For example, in the embodiment wherein support 200 comprises a flexible mat, the weight of a user is transferred to an extended area of front face 200ff of support 200. From the front face 200ff the weight is then transferred to surface 20s through support 200. Support 200, which preferably comprises a polymeric or a rubber material, has a thickness greater than zero and generally locally deforms in reply to a pressure force being applied to a portion of one of its large faces. The local deformation of support 200 thus contributes to "dampen" the force exerted by the weight of the user on surface 20s by better distributing it across surface 20s and preventing an excessive pressure from being exerted onto surface 20s due to application of a force across a restricted surface area. In this manner, support 200 contributes to further protect surface 20s from damages due to the weight of a person standing upon it.

Device 1000 is also handy and practical to use and to store when not in use. The choice of materials can be made so that device 1000 is relatively lightweight as compared, for example, to commercial ladders of similar sizes. Furthermore, in some embodiments of the present invention, device 1000 can be easily rolled after fastening means have been unfastened and device 1000 has been removed from the surface after operation. This greatly simplifies storage and transport of device 1000 when not in use.

Device 1000 can be advantageously used during the fabrication of a blade for a wind turbine. This application of device 1000 is schematically illustrated in Figures 3 and 4.

With reference to Figure 3, wind turbine blades are usually formed by using moulds. A typical wind turbine blade mould comprises two halves 32 and 34, respectively. Across the surface defined by the inner walls of each half 32 and 34, two mutually orthogonal directions can be identified. The longitudinal direction L runs along the longer direction of halves 32 and 34, i.e. the longitudinal direction L connects the root and the tip of the blade. On the other hand, given a point of the inner wall of mould half 32 or 34, the transverse or chordwise direction C at that point is defined as the curve on the inner wall of mould half 32 or 34 perpendicular to the longitudinal direction L and including that point. Although in Fig. 3 the longitudinal direction L and the chordwise direction C are only shown for mould half 34, it is understood that analogous directions are defined for mould half 32. One of the mould halves 32 or 34 can be turned by means of motorized turner hinges 50 over the other mould half, so as to form the final blade shape.

The discussion in the following will be mainly given in relation to mould half 32, although it is understood that an analogous or symmetric discussion can be made in relation to mould half 34.

Mould half 32 comprises an upper surface 32us, opposite the lower or bottom surface laying on a plane supporting mould half 32. This supporting plane, used as a reference plane, may be the reference plane, which in figures 3 and 4, as well as in Figurers 1 and 2, is parallel to horizontal plane xy. Inclined surface 20s to be climbed or accessed is indicated in Fig. 3 as being included in the inner wall of mould half 32. Inclined surface 20s comprises an upper edge 20ue, also defining a boundary of upper surface 32us of mould half 32.

In a typical blade production process, a reinforcement material 2 such as glass fiber is laid onto the inner walls of mould halves 32 and 34. Usually, reinforcement material 2 is initially provided in the form of rolls, as shown in Fig. 3. Rolls have a typical width of 1.25 m and are laid next to each other along chordwise direction C. Along with reinforcement material, a foam material 4 shown in Fig. 4 is also laid into mould halves 32 and 34. Furthermore, in order to build a spar cap in each mould half 32 and 34, layers 6 of unidirectional fibers of glass or carbon are positioned centrally to extend along the mould halves 32 and 34 in the longitudinal direction L. Foam material 4 and unidirectional fiber layers 6 may be also provided in the form of rolls.

The material deposition process is done while the mould is in an open position. The fiber material is impregnated, preferably in a vacuum infusion process, with epoxy resin, which is cured to form a solid shell with a sandwich structure. Mould halves 32 and 34 may also be used for positioning sheets of pre-impregnated fiber, known as pre-preg.

A web, extending along the longitudinal direction L of the mould, is then positioned in one of the mould halves with adhesive along upper and lower faces. Adhesive is also placed along the edges of the deposited material. Subsequently, the rotatable half of the mould is turned so as to form the blade.

The production process is particularly cumbersome, mainly due to the dimensions of the mould and to the high number of layers which have to be stacked onto the inner wall of the mould. Indeed, since the length of a typical blade can be as high as about 80 m, many rolls of reinforcement material 2, of foam 4 or of unidirectional fiber material 6 have to be used in order to cover the entire inner wall of the mould with a single layer. A typical blade production may require as many as twenty different layers of reinforcement, foam or fiber material stacked onto the mould inner wall. This is not a trivial task to accomplish, if one considers that the walls of the mould are extremely steep, concave and that they can be up to several metres high. Furthermore, while laying a new layer on top of a previously deposited layer, it is crucial that the under-lying layers are not damaged.

In order to speed up and facilitate the operation of material deposition, the method according to the present invention can be used. In Fig. 3, two devices 1000a and 1000b are shown. The devices 1000a and 1000b are suspended to surface 20s of the inner wall of mould half 32. In particular, the fastening means of devices 1000a and 1000b may be used in order to fasten them to the upper edge 20ue of surface 20s. The devices 1000a and 1000b are placed so that their longitudinal direction is substantially parallel to chordwise direction C of mould half 32. Furthermore, devices 1000a and 1000b are placed next to opposite sides of glass fiber sheet 2. In this manner, glass fiber sheet 2 can be laid in a chordwise direction C by an operator going up and down the steps of devices 1000a and 1000b.

As material is added, the devices 1000a and 1000b are moved along the longitudinal direction L of mould halves 32 and 34, and further sheets 2 are placed in the mould. The devices 1000a and 1000b can also be used to lay layers of foam material 4, as well as to work with the layers of unidirectional fiber material 6 in the central parts of the mould halves 32 and 34.

It is to be appreciated that surface 20s is generally concave, with a variable radius of curvature along the longitudinal directions L of mould halves 32 and 34. However, the radius of curvature of surface 20s may be up to several metres at some points along longitudinal directions L. Given the typical dimensions of moulds 32 and 34, a stiff ladder leaning on upper edge 20ue of surface 20s could be 1 or 2 metres distant from a points of surface 20s immediately below it. Thus, a user standing on a stiff ladder would most probably not have access to the portions of surface 20s lying farthest from the position of the ladder due to the concavity of surface 20s. Conversely, device 1000 adheres and conforms to all portions of surface 20s. Furthermore, even when being moved along longitudinal directions L in order to be repositioned between two consecutive roll depositions, device 1000 can readily adapt to the different curvature of different portions of surface 20s. Therefore, device 1000 is particularly indicated for this type of applications.

One more advantage when depositing fiber material by using the device 1000 is that it also assists with consolidation of materials. Indeed, when placing device 1000 on previously deposited material during fiber material layup, the deposited material is compressed between the walls of the mould and support 200 of device 1000.

Although an example of a method using a device 1000 has been described in relation to fiber material layup, device 1000 can be conveniently used for many tasks required during wind turbine blade production. For example one or more than one device 1000 can advantageously be used to provide access to mould inner walls for deposition of foam, carbon pultrusions (at root termination point) and infusion consumable materials such as conduit, peel ply, release film, transfer mesh, etc.

Although the present invention has been previously clarified by means of a detailed description of its embodiments shown in the attached drawings, it is to be specified that the present invention is not limited to the shown and described embodiments. Rather, all those embodiments equivalent to those described and shown which will be apparent to the person skilled in the art belong to the present invention. The scope of protection of the present invention is thus defined by the claims.

## Claims

1. A method of producing a wind turbine blade, said method comprising:
providing a mould (32, 34) of the desired shape, said mould having a longitudinal direction (L);
laying one or more layers of reinforcement or foam material (2, 4, 6) onto the inner walls of said mould (32, 34);
**characterized by** positioning in the desired position said one or more layers of reinforcement or foam material (2, 4, 6) by using one or more devices (1000, 1000a, 1000b) to climb up an inclined surface (20s) at said inner walls of said mould (32, 34), said device (1000) comprising: a flexible support (200) comprising a back face (200bf) and a front face (200ff), said back face (200bf) of said support (200) being adapted to abut on said surface (20s) during operation of said device (1000), said flexible support (200) being adapted to conform to the curvature profile of said surface (20s) to be climbed, said flexible support (200) being suitably extended so as to distribute across said surface (20s) the weight of an operator climbing up said surface (20s) during operation of said device (1000),
fastening means for fastening said device (1000) so that the position of said device (1000) with respect to said surface (20s) is substantially constant during operation of said device (1000), said fastening means being connected to said support (200), and
climbing elements (400, 600) firmly fixed to said front face (200ff) of said flexible support (200), said climbing elements (400, 600) being adapted to allow a user to climb up or be supported at a predetermined position on said surface (20s), wherein said climbing elements (400, 600) comprise a plurality of steps (400), each step of said plurality of steps protruding outwards from said front face (200ff) of said support (200).

2. Method according to claim 1 further comprising:
moving at least one of said one or more devices along said longitudinal direction of said mould after placing at least one layer of said one or more layers of reinforcement or foam material.

3. Method according to one of claims 1 or 2, wherein at least one of said one or more devices is oriented in a chordwise direction of said mould, i.e. in a direction transverse to said longitudinal direction (L).

4. Method according to any preceding claim, wherein at least one of said one or more devices is placed next to one side of one layer of said one or more layers of reinforcement or foam material.

5. Method according to any preceding claim, wherein at least one of said steps (400) comprises a pocket, said pocket being firmly fixed to said front face (200ff) of said support (200), and preferably wherein said pocket of said at least one step (400) comprises an aperture which can be alternatively closed and opened, said aperture for enabling introduction of a support element into said pocket and extraction of said support element from said pocket.

6. Method according to claim 1, wherein said support (200) is formed so as to be continuous and free from cut-out portions between two consecutive steps (400) of said plurality of steps.

7. Method according to any claim from 1 to 6, wherein said climbing elements (400, 600) additionally comprise a plurality of handles (600) adapted to be held by a user when climbing up said surface (20s).

8. Method according to claim 7 wherein at least one handle (600) of said plurality of handles (600) is located at a position of said front face (200ff) of said support (200) between two consecutive steps (400) of said plurality of steps (400).

9. Method according to any one of claims 1 to 8, wherein at least one of said climbing elements (400, 600) is integrally formed with said support (200).

10. Method according to any one of claims 1 to 9, wherein said flexible support (200) and/or said climbing elements (400, 600) comprise a rubber or an elastomer.

11. Method according to any one of claims 1 to10, wherein said surface (20s) comprises a an upper edge (20ue) lying above a reference horizontal plane (40) and wherein said fastening means are adapted to fasten said device to said upper edge (20ue) of said inclined surface (20s).

12. Method according to one of claims 1 to 11, wherein said fastening means comprise one or more rings, each one of said rings being constrained to slide along a pole, the position of said pole being constant with respect to the position of said inclined surface (20s) during operation of said device.

13. Method according to any one of claims 1 to 12, wherein said fastening means comprise one or more suction pads adapted to be fixed to said inclined surface (20s).

14. Method according to any one of claims 1 to 13, wherein the width of said support (200) is greater than the length of each one of said climbing elements (400, 600), preferably wherein said support (200) has a width greater than 20 cm and/or less than 80 cm.

15. Method according to any one of claims 1 to 14, wherein said flexible support (200) comprises a mat.

## Patentansprüche

1. Verfahren zum Herstellen eines Windturbinenblatts, das Verfahren umfassend:
Bereitstellen einer Form (32, 34) mit der gewünschten Gestalt, wobei die Form eine Längsrichtung (L) aufweist;
Legen von einer oder mehreren Schichten von Verstärkungs- oder Schaumstoffmaterial (2, 4, 6) auf die Innenwände der Form (32, 34);
**gekennzeichnet durch**
Positionieren der einen oder der mehreren Schichten von Verstärkungs- oder Schaumstoffmaterial (2, 4, 6) in der gewünschten Position unter Verwendung von einer oder mehreren Vorrichtungen (1000, 1000a, 1000b) zum Hinaufsteigen einer geneigten Oberfläche (20s) an den Innenwänden der Form (32, 34), wobei die Vorrichtung (1000) umfasst:
einen flexiblen Träger (200), der eine Rückseite (200bf) und einer Vorderseite (200ff) umfasst, wobei die Rückseite (200bf) des Trägers (200) ausgebildet ist, um an der Oberfläche (20s) während dem Betrieb der Vorrichtung (1000) anzuliegen, wobei der flexible Träger (200) ausgebildet ist, um sich einem Krümmungsprofil der hinaufzusteigenden Oberfläche (20s) anzupassen, wobei der flexible Träger (200) in geeigneter Weise derart verlängert ist, um das Gewicht eines Betreibers, der während dem Betrieb der Vorrichtung (1000) die Oberfläche (20s) hinaufsteigt, über die Oberfläche (20s) zu verteilen,
Befestigungsmittel zum Befestigen der Vorrichtung (1000), sodass die Position der Vorrichtung (1000) in Bezug auf die Oberfläche (20s) während dem Betrieb der Vorrichtung (1000) im Wesentlichen konstant ist, wobei die Befestigungsmittel mit dem Träger (200) verbunden sind, und
Steigelemente (400, 600), die fest an der Vorderseite (200ff) des flexiblen Trägers (200) befestigt sind, wobei die Steigelemente (400, 600) ausgebildet sind, um einem Benutzer zu ermöglichen, an einer vorbestimmten Position auf der Oberfläche (20s) hinaufzusteigen oder getragen zu werden, wobei die Steigelemente (400, 600) eine Mehrzahl von Stufen (400) umfassen, wobei jede Stufe der Mehrzahl von Stufen von der Vorderseite (200ff) des flexiblen Trägers (200) nach außen vorstehen.

2. Verfahren nach Anspruch 1, weiter umfassend:
Bewegen von zumindest einer der einen oder der mehreren Vorrichtungen entlang der Längsrichtung der Form nach dem Platzieren von zumindest einer Schicht der einen oder der mehreren Schichten von Verstärkungs- oder Schaumstoffmaterial.

3. Verfahren nach Anspruch 1 oder 2, wobei zumindest eine der einen oder der mehreren Vorrichtungen in einer Schwenkrichtung der Form, d.h. in einer Richtung senkrecht zu der Längsrichtung (L), ausgerichtet ist.

4. Verfahren nach einem der vorstehenden Ansprüche, wobei zumindest eine der einen oder der mehreren Vorrichtungen neben einer Seite einer Schicht der einen oder der mehreren Schichten von Verstärkungs- oder Schaumstoffmaterial platziert ist.

5. Verfahren nach einem der vorstehenden Ansprüche, wobei zumindest eine der Stufen (400) eine Tasche umfasst, wobei die Tasche fest an der Vorderseite (200ff) des Trägers (200) befestigt ist, und vorzugsweise, wobei die Tasche der zumindest einen Stufe (400) eine Öffnung umfasst, die alternativ geschlossen und geöffnet werden kann, wobei die Öffnung zum Ermöglichen des Einführens eines Trägerelements in die Tasche und des Herausziehens des Trägerelements aus der Tasche vorgesehen ist.

6. Verfahren nach Anspruch 1, wobei der Träger (200) derart ausgebildet ist, dass er kontinuierlich und frei von ausgeschnittenen Abschnitten zwischen zwei aufeinanderfolgenden Stufen (400) der Mehrzahl von Stufen ist.

7. Verfahren nach einem der Ansprüche 1 bis 6, wobei die Steigelemente (400, 600) zusätzlich eine Mehrzahl von Griffen (600) umfassen, die ausgebildet sind, um von einem Benutzer gehalten zu werden, wenn er die Oberfläche (20s) hinaufsteigt.

8. Verfahren nach Anspruch 7, wobei zumindest ein Griff (600) der Mehrzahl von Griffen (600) an einer Position der Vorderseite (200ff) des Trägers (200) zwischen zwei aufeinanderfolgenden Stufen (400) der Mehrzahl von Stufen (400) angeordnet ist.

9. Verfahren nach einem der Ansprüche 1 bis 8, wobei zumindest eines der Steigelemente (400, 600) einstückig mit dem Träger (200) ausgebildet ist.

10. Verfahren nach einem der Ansprüche 1 bis 9, wobei der flexible Träger (200) und/oder die Steigelemente (400, 600) Gummi oder ein Elastomer umfassen.

11. Verfahren nach einem der Ansprüche 1 bis 10, wobei die Oberfläche (20s) eine obere Kante (20ue) umfasst, die oberhalb einer Bezugshorizontalebene (40) liegt, und wobei die Befestigungsmittel ausgebildet sind, um die Vorrichtung an der oberen Kante (20ue) der geneigten Oberfläche (20s) zu befestigen.

12. Verfahren nach einem der Ansprüche 1 bis 11, wobei die Befestigungsmittel einen oder mehrere Ringe umfasst, wobei jeder einzelne der Ringe eingeschränkt ist, um entlang einer Stange zu gleiten, wobei die Position der Stange in Bezug auf die Position der geneigten Oberfläche (20s) während des Betriebs der Vorrichtung konstant ist.

13. Verfahren nach einem der Ansprüche 1 bis 12, wobei die Befestigungsmittel einen oder mehrere Saugnäpfe umfassen, die ausgebildet sind, um an der geneigten Oberfläche (20s) befestigt zu werden.

14. Verfahren nach einem der Ansprüche 1 bis 13, wobei die Breite des Trägers (200) größer ist, als die Länge von jedem einzelnen der Steigelemente (400, 600), vorzugsweise, wobei der Träger (200) eine Breite aufweist, die größer als 20 cm und/oder kleiner als 80 cm ist.

15. Verfahren nach einem der Ansprüche 1 bis 14, wobei der flexible Träger (200) eine Matte aufweist.

## Revendications

1. Procédé de production d'une pale d'éolienne, ledit procédé comprenant :
la fourniture d'un moule (32, 34) de la forme désirée, ledit moule ayant une direction longitudinale (L) ;
le dépôt d'une ou plusieurs couches de renfort ou de matériau en mousse (2, 4, 6) sur les parois internes dudit moule (32, 34) ;
**caractérisé par** le positionnement dans la position souhaitée desdites une ou plusieurs couches de renfort ou de matériau en mousse (2, 4, 6) en utilisant un ou plusieurs dispositifs (1000, 1000a, 1000b) pour escalader une surface inclinée (20s) au niveau desdites parois internes dudit moule (32, 34), ledit dispositif (1000) comprenant : un support flexible (200) comprenant une face arrière (200bf) et une face avant (200ff), ladite face arrière (200bf) dudit support (200) étant adaptée pour venir en butée contre ladite surface (20s) pendant le fonctionnement dudit dispositif (1000), ledit support flexible (200) étant adapté pour se conformer au profil de courbure de ladite surface (20s) à escalader, ledit support flexible (200) étant étendu de manière adaptée de façon à distribuer à travers ladite surface (20s) le poids d'un opérateur escaladant ladite surface (20s) pendant le fonctionnement dudit dispositif (1000),
des moyens de fixation pour fixer ledit dispositif (1000) de sorte que la position dudit dispositif (1000) par rapport à ladite surface (20s) soit sensiblement constante pendant le fonctionnement dudit dispositif (1000), lesdits moyens de fixation étant connectés audit support (200), et
des éléments d'escalade (400, 600) fixés fermement à ladite face avant (200ff) dudit support flexible (200), lesdits éléments d'escalade (400, 600) étant adaptés pour permettre à un utilisateur d'escalader ou d'être supporté à une position prédéterminée sur ladite surface (20s), dans lequel lesdits éléments d'escalade (400, 600) comprennent une pluralité de marches (400), chaque marche de ladite pluralité de marches faisant saillie vers l'extérieur depuis ladite face avant (200ff) dudit support (200).

2. Procédé selon la revendication 1 comprenant en outre :
le déplacement d'au moins l'un desdits un ou plusieurs dispositifs le long de ladite direction longitudinale dudit moule après le placement d'au moins une couche desdites une ou plusieurs couches de renfort ou de matériau en mousse.

3. Procédé selon l'une des revendications 1 ou 2, dans lequel au moins l'un desdits un ou plusieurs dispositifs est orienté dans une direction en corde dudit moule, c'est-à-dire dans une direction transversale à ladite direction longitudinale (L).

4. Procédé selon une quelconque revendication précédente, dans lequel au moins l'un desdits un ou plusieurs dispositifs est placé à côté d'un côté d'une couche desdites une ou plusieurs couches de renfort ou de matériau en mousse.

5. Procédé selon une quelconque revendication précédente, dans lequel au moins l'une desdites marches (400) comprend une poche, ladite poche étant fixée fermement à ladite face avant (200ff) dudit support (200), et de préférence dans lequel ladite poche de ladite au moins une marche (400) comprend une ouverture qui peut être alternativement fermée et ouverte, ladite ouverture permettant l'introduction d'un élément de support dans ladite poche et l'extraction dudit élément de support de ladite poche.

6. Procédé selon la revendication 1, dans lequel ledit support (200) est formé de manière à être continu et exempt de découpes entre deux marches (400) consécutives de ladite pluralité de marches.

7. Procédé selon l'une quelconque des revendications 1 à 6, dans lequel lesdits éléments d'escalade (400, 600) comprennent en outre une pluralité de poignées (600) adaptées pour être tenues par un utilisateur lors de l'escalade de ladite surface (20s).

8. Procédé selon la revendication 7, dans lequel au moins une poignée (600) de ladite pluralité de poignées (600) est située à une position de ladite face avant (200ff) dudit support (200) entre deux marches consécutives (400) de ladite pluralité de marches (400).

9. Procédé selon l'une quelconque des revendications 1 à 8, dans lequel au moins l'un desdits éléments d'escalade (400, 600) fait partie intégrante dudit support (200).

10. Procédé selon l'une quelconque des revendications 1 à 9, dans lequel ledit support flexible (200) et/ou lesdits éléments d'escalade (400, 600) comprennent un caoutchouc ou un élastomère.

11. Procédé selon l'une quelconque des revendications 1 à 10, dans lequel ladite surface (20s) comprend un bord supérieur (20ue) situé au-dessus d'un plan horizontal de référence (40) et dans lequel lesdits moyens de fixation sont adaptés pour fixer ledit dispositif audit bord supérieur (20ue) de ladite surface inclinée (20s).

12. Procédé selon l'une quelconque des revendications 1 à 11, dans lequel lesdits moyens de fixation comprennent une ou plusieurs bagues, chacune desdites bagues étant contrainte à coulisser le long d'un poteau, la position dudit poteau étant constante par rapport à la position de ladite surface inclinée (20s) pendant le fonctionnement dudit dispositif.

13. Procédé selon l'une quelconque des revendications 1 à 12, dans lequel lesdits moyens de fixation comprennent une ou plusieurs ventouses adaptées pour être fixées à ladite surface inclinée (20s).

14. Procédé selon l'une quelconque des revendications 1 à 13, dans lequel la largeur dudit support (200) est supérieure à la longueur de chacun desdits éléments d'escalade (400, 600), de préférence dans lequel ledit support (200) a une largeur supérieure à 20 cm et/ou inférieure à 80 cm.

15. Procédé selon l'une quelconque des revendications 1 à 14, dans lequel ledit support flexible (200) comprend un tapis.
